# EUROPEAN PATENT SPECIFICATION

(11) **EP 0 798 835 B1**
(45) Date of publication and mention of the grant of the patent: **15.03.2000**
(21) Application number: 96201800.8
(22) Date of filing: 28.06.1996
(51) Int. Cl.: H02B 1/20, H02B 1/052

(54) **Board and interconnection device for electrical installations with modular devices**
Schalttafel und Anschlusseinrichtung für elektrische Installationen mit modularen Einrichtungen
Tableau et dispositif de connexion pour installations électriques avec dispositifs modulaires

(30) Priority: 26.03.1996 IT MI960231
(43) Date of publication of application: 01.10.1997
(73) Proprietor: BTICINO S.P.A., 20154 Milano (IT)
(72) Inventor: Rossetti, Gianpaolo, 26100 Cremona (IT)
(74) Representative: Perani, Aurelio

(56) References cited:
- EP-A- 0 467 170
- GB-A- 2 217 518

## Description

The present invention relates to an improved electrical distribution and protection board for installations with modular electrical devices interconnected by means of an electrically-conductive toothed bar, and also to an electrical interconnection device for use with such a board.

It is known that, in domestic, civil and industrial low-power electrical installations, use is made of distribution and protection boards which are fitted on a wall and in which a plurality of modular electrical devices, or simply modules, are engaged side by side on a support track fixed to the wall, each module being engaged by means of a pair of engagement teeth of which one is fixed and the other is movable and can be operated to permit engagement and release.

It is known that, in order to simplify and facilitate electrical-interconnection operations between the modules which often require the output terminal of one module (for example, a differential protection device) to be connected electrically to input terminals of a plurality of modules (for example, thermomagnetic safety switches for sections of the installation), use is made of electrically-conductive bars having teeth which are arranged regularly with a modular spacing equal to the thickness of the modules, and each of which is engaged and clamped in the terminal of one of the modules.

When the modules are interconnected by means of electrically conductive bars in this manner, the maintenance of these boards and their adaptation to new installation requirements is difficult because, in order to replace a defective module or to add new modules to the installation it is generally necessary to loosen all of the clamping terminals which engage the bar and to remove the bar and, only in this condition, is it possible to release the modules from the track and engage them thereon, carrying out the necessary replacements/changes in the number of modules fitted.

At this point it is then necessary to put back the bar currently on the modules, to introduce the teeth into the terminals and to re-clamp all of the terminals which have to be connected electrically to the teeth of the bar.

This is necessary because the clamping terminals open in a face of each module which is perpendicular to the coupling plane of the modules and the support track and the engagement of a module on the track or its removal therefrom can be carried out only by a translation of the module relative to the track combined with a rotation of the module about the fixed engagement tooth.

This rotation is made impossible by the presence of the track, a tooth of which interferes with the jaws of the terminal, even when the terminal is fully open.

A further disadvantage of this type of fitting is that, since the electrically-conductive bar is removable, it involves the risk of undesired electrical contacts of its teeth with the electrical devices in the course of its manipulation and in any case involves the need for undesirable manipulations which are made difficult by the limited space available in the recessed housing of the switchboard in the wall. Moreover, it is particularly difficult to fit the bar below the modules when the needs of the installation require it because it is necessary simultaneously to hold the bar in position and to clamp the terminals.

To prevent these problems, published European patent application No. EP-A-0 434 964 describes and proposes the production of electrical modules each having a "rear" resilient pincer connection terminal opening in the wall of the module which faces the support track so that several modules can be interconnected by means of an electrically-conductive bar disposed in the plane of the support track and having teeth which are perpendicular to that plane and engage under pressure in the "rear" terminals of the modules, without the need to remove the electrically-conductive bar which is fixed to the wall parallel to the support track, suitably protected by an insulating sheath.

The most recent Italian patent application filed under the No. MI94A02111 (see also EP 0 708 510 A) also proposes an improvement consisting of the provision of an electrically-conductive support bar which snap-engages on the support track, eliminating all of the difficulties connected with the mounting of the bar on the wall in a precise position relative to the track which is necessary for correct and easy insertion of the teeth in the terminals.

Although technically satisfactory, these solutions have the limitation that the use of the interconnecting bar requires the use of electric modules having "rear" terminals and cannot be reconciled with the use of electrical modules having only terminals on faces perpendicular to the rear face, which are more widespread and less expensive.

Document GB-A-2217518 discloses a mounting assembly for electrical devices comprising a mounting rail with opposed flanges in combination with a comb-like bus-bar mounted parallel thereto; the bus-bar is mounted on the flanges of the rail by several brackets, and modules can be simultaneously mounted on the rail and electrically connected to the bus-bar by a rotational movement.

The problems and limitations of the prior art are overcome by the present invention, as set out in claims 1 and 4. Briefly, there is provided an electrical distribution and protection board the fitting-out, maintenance and modification of which are made particularly easy by the use of electric modules each having a pair of track-engagement teeth which can be operated in order to adopt a release position and an engagement position, and of an electrically-conductive bar which is fixed to the support track by means of an angular support element and has teeth for insertion in clamping terminals of the electric modules opening in a face of each module which is perpendicular to the face of the module coupled with the support track.

The insertion of the teeth in the terminals (or the removal of the teeth from the terminals) is carried out simply by translation of the modules in two directions perpendicular to one another without the need to remove the bar and hence to carry out disconnections of modules already fitted.

The characteristics and the advantages of the invention will become clearer from the following description of a preferred embodiment and from the appended drawings, in which:
Figure 1 is an exploded, perspective view of a preferred embodiment of an electrical protection and distribution board according to the present invention,
Figure 2 is a side view of the electrical board of Figure 1 with an electrical module positioned during a first operative stage of its fitting on the track and the insertion of one or more teeth of an electrically-conductive bar,
Figure 3 is a side view of the electrical board of Figure 1 with an electrical module positioned during a second operative stage of its fitting on the track,
Figure 4 is a side view of the electrical board of Figure 1 with an electrical module positioned in a third and last operative stage of its fitting on the track.

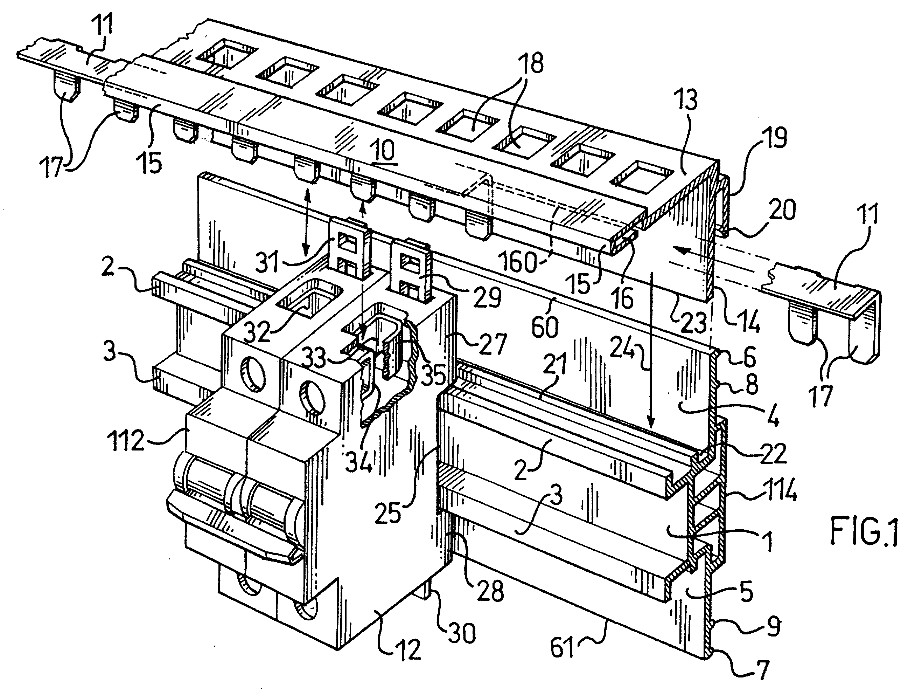

With reference to Figure 1, an electrical board according to the present invention comprises, housed in a box-like body of known type, not shown, fitted in a wall with an open face flush with the wall, a track 1 for supporting electrical modules, an angular support 10 for an electrically-conductive bar 11, the electrically-conductive bar 11, and a plurality of electrical modules of which only two 12, 112 are shown. The support track has two parallel rails 2, 3 arranged horizontally and is preferably but not necessarily produced by extrusion of plastics material.

The track 1 is fixed, in conventional manner, to the base of the box-like body with a rear face 114 in contact with the base of the box-like body and is extended at the top and at the bottom by two flanges which are elongate along the track and extend parallel to the plane defined by the track and by the base of the box-like body, at a suitable distance therefrom.

Each of the flanges 4 and 5 has, on its free end edge 60, 61, a respective first rib 6, 7 projecting from the rear face (with reference to the fitted condition) and, close to the first rib and parallel thereto, a respective second rib 8, 9 also projecting from the rear face.

The angular support 10, which is elongate along the track 1, is formed by two perpendicular flanges 13 and 14, a housing 16 of rectangular cross-section formed in the first flange 13, close to its free edge 15, being elongate along the track 1 and opening on the inside of the flange 13 by means of a continuous slot 160 parallel to the free edge 15.

The electrically-conductive bar 11, which is essentially a flat strip of conductive material, preferably copper, having a plurality of teeth such as 17 extending at right angles from an edge of the strip and spaced uniformly along it, is inserted in the housing 16 from one end of the angular support.

The teeth such as 17 project from the housing 16 through the continuous slot 160 of the housing 16.

The teeth are disposed at intervals equal to the thickness of the electrical modules which have to be fitted on the track in the direction thereof.

A plurality of holes such as 18 is also formed in the flange 13 of the angular support, the holes being aligned in the direction in which the flange extends, spaced uniformly at the same intervals as the teeth 17, and aligned with the teeth in a direction perpendicular to the length of the flange.

Projecting from the flange 14 and parallel thereto at a distance equal to the thickness of the flange 4 of the track increased by the thickness of the ribs 6, 8, is a lip 19 which is elongate along the flange 14 and terminates at its free edge in an engagement tooth 20.

The flange 14 and the lip 19 form a continuous U-shaped seating which engages on the flange 4 of the track by irreversible snap-engagement of the tooth 20 with the rib 8.

The angular support 10 is also advantageously produced by extrusion of electrically-insulating plastics material.

A more rigid connection between the angular support 10 and the track 1 is ensured by a rib 21 on the track 1 which, with the flange 4, forms a channel 22 in which the free edge 23 of the flange 14 engages when the angular support 10 is snap-engaged on the track by translation in the direction indicated by the arrow 24.

A plurality of electrical modules, for example, thermomagnetic switches, of which only two, 12, 112 are shown, is fixed on the track 1.

The electrical modules, of generally rectangular parallelepipedal shape, are fixed to the track 1 side by side with their side faces in mutual contact and with their rear faces 25 bearing against the upper faces or flanges of the tracks 2, 3.

The modules are positioned in the direction transverse the rails by two projections 27, 28 on the rear faces of the modules.

The projections house engagement devices, for example, of the type described in published European patent application No. 0680114 which are operable in order to adopt an engagement position in which an engagement tooth extends into the mortice-like recess formed between the projections and engages with a lateral and lower face of one of the rails, and a release position in which the engagement tooth is retracted entirely inside the projection.

The engagement devices are operated by operating heads such as those indicated 29, 30, 31 in Figure 1 which extend outside the modules on the lower and upper faces (with reference to the fitted condition).

Opening in the same faces in each of the modules is an opening for access to a conventional clamping terminal formed by a fixed jaw and a movable jaw which can be clamped and screwed against the fixed jaw.

In Figure 1 the openings 32, 33 for access to two clamping terminals of the modules 12, 112, respectively, are visible on the upper face and the fixed jaw 34 and the movable jaw 35 of a terminal can be seen inside the opening 33, which is suitably sectioned.

Normally, the maximum opening of the jaws is somewhat greater than the depth of the projections 27, 28 and, by way of example, is of the order of 9-10 mm.

With components of this type, the assembly of an electrical board according to the invention, its maintenance and any modifications of the system are extremely easy.

The angular support 10 can easily be snap-engaged on the flange 4 (or 5) of the track 1 even with the track already installed in the box-like body.

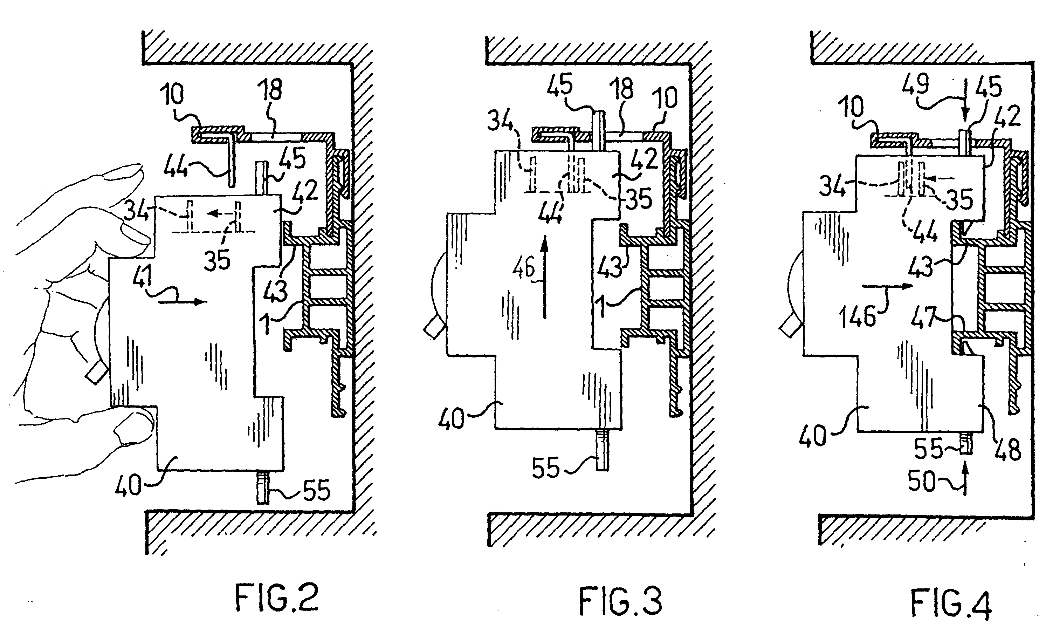

Once the angular support 10 is fixed to the flange 4, the electrical modules can easily be fixed on the track 1 after the terminals have been opened and the engagement devices positioned in the release position. The operative engagement sequence is shown in the side views of Figures 2, 3, 4.

In a first stage (Figure 2), an electric module 40 is inserted in the switchboard housing in the direction indicated by the arrow 41 and bears with a projection 42 against the track 43.

The insertion takes place with a certain vertical offset relative to the final fitting position to prevent interference between the body of the module 40 and the tooth 44 of the electrically-conductive bar and, if permitted by the dimensions of the housing, also to prevent possible interference between the head 45 of an engagement device and the tooth 44.

Otherwise, the head 45 of the engagement device may be made to pass beyond the tooth 44 by a suitable rotation of the module 40.

In a second stage (Figure 3), the electrical module is translated upwardly parallel to the plane of the track in the direction indicated by the arrow 46 so as to centre the module 40 on the track 1.

By this operation, the head 45 of the engagement device is inserted freely and easily in one of the holes 18 of the angular support 10 and, at the same time, the tooth 44 of the electrically-conductive bar is inserted freely and easily between the fixed jaw 34 and the movable jaw 35 of a terminal.

In a third stage (Figure 4), the electrical module, which is already centred on the track, is pushed in the direction indicated by the arrow 146 towards the inside of the housing perpendicular to the plane of the track so that the tracks 43, 47 engage in the recess formed between the projections 42, 48 of the module.

In the course of this operation, the tooth 44 of the electrically-conductive bar can translate freely in the empty space between the jaws of the terminals until it contacts the fixed jaw 34.

Clearly, for this purpose, the angular support 10 for the electrically-conductive bar is of a size such that, when the angular support is correctly fitted on the track and the electrical modules are correctly fitted on the track, the teeth of the electrically-conductive bar are disposed beside and in contact with the fixed jaws of the terminals.

The head 45 of the engagement device can also move freely in the hole 18 in the angular support.

Upon completion of the operation, the engagement devices can be operated in known manner by action on the respective heads 45, 55 in the directions indicated by the arrows 49, 50, respectively, so as to be placed in the engagement position.

At this point, the connection terminal can be clamped and the fitting of the module is complete.

In order to remove the module if it is necessary to replace it, it suffices to perform the same operations in reverse order without the need to remove the electrically-conductive bar or to loosen the clamping of the terminals of other modules on the bar.

Fitting and maintenance operations are therefore extremely easy and reliable, can be carried out in conditions of maximum safety, and do not involve the electrical disconnection and reconnection of modules other than that which is to be fitted or possibly replaced, to the benefit of the reliability of the system.

Clearly, many variations may be applied to the invention; for example, the angular support 10 may be extruded integrally with the track 1 and, if it is separate therefrom, the mutual snap-engagement means may adopt forms other than those described.

## Claims

1. An electrical distribution and protection board comprising a track (1) adapted to receive a plurality of modular electrical devices (12, 112) fitted on the track (1) by means of pairs of engagement teeth (29, 30) of each electrical device (12, 112), the teeth being operable in order to adopt a release position and each of the modular devices having at least one clamping terminal which has a movable jaw (35) facing a fixed jaw (34), and which opens in a face of the module perpendicular to the plane of the track, the fixed jaw (34) extending in a plane spaced by a predetermined distance from the plane of the track when the respective module is fitted on the track, and the movable jaw extending in a plane between the plane of the track and the plane of the fixed jaw, and an electrical interconnection device comprising an electrically-conductive bar (11) having flat teeth (17) which extend perpendicular to the said faces of the modules and in use are inserted in the clamping terminals to provide an electrical connection between the devices, and support means for supporting the said bar,
characterized in that the support means comprises:
an angular support element (10) of insulating material fixed to the track (1) and extending in a plane parallel to the said face in order to form a sheath for housing, insulating and firmly supporting the electrically-conductive bar (11), the bar being supported firmly in a position relative to the track (1) such that the teeth (17) extend perpendicular to the said faces of the modules in the same plane in which the fixed jaws (34) of the modules extend once they are fitted,
the angular support element (10) having openings (18) in the plane parallel to the said face for access to operating heads of the engagement teeth of the modular devices to allow them to be operated.

2. An electrical board according to Claim 1, in which the track (1) has a flange (4) for the mounting of the angular support (10) and the angular support has means (14, 19, 20) for irreversible snap-engagement on the mounting flange (4).

3. An electrical board according to Claim 2, in which the mounting flange (4) forms an engagement channel (22) with the track (1) and has at least one rib (8) parallel to the track forming a first continuous engagement tooth, and in which the snap-engagement means comprise a U-shaped seating (14, 19) which extends throughout the length of the angular element (10) and in which the mounting flange (4) is inserted with an edge (14) of the seating engaged in the channel, the other edge (19) of the seating having a second continuous engagement tooth (20) which irreversibly snap-engages with the first engagement tooth (8).

4. An electrical interconnection device with an electrically-conductive bar for use in an electrical distribution board according to the preamble of claim 1, comprising:
- an electrically-conductive bar (11) which is elongate in one direction and extends in a plane, and which has teeth (17) extending perpendicular to the said direction and to the said plane and spaced in the said direction at intervals equal to a standardized thickness of electric modules, and
- an angular support element (10) of insulating material which is elongate in the said direction and is formed by two perpendicular flanges (13, 14), a first flange (13) extending in the said plane and having a continuous channel (16) with an L-shaped cross-section extending in the said direction and forming a housing and insulating sheath for the bar (11) which is engaged therein by insertion from one end of the angular element (10), and openings (18) being formed in the first flange (13) and being distributed uniformly at the said intervals along the length of the angular element (10),
- the second flange (14) having means (14, 19, 20) for irreversible snap-engagement with a corresponding mounting flange (4) of a track (1) for the engagement of electric modules.

## Patentansprüche

1. Elektrische Verteiler- und Schutztafel mit einer Schiene (1), die eine Vielzahl von modularen elektrischen Einrichtungen (12, 112) aufzunehmen gestattet, welche an der Schiene (1) mit Hilfe von Paaren von Eingriffszähnen (29, 30) der jeweiligen elektrischen Einrichtung (12, 112) angebracht sind, wobei die Zähne zur Annahme einer Auslöseposition betätigbar sind und wobei jede der modularen Einrichtungen zumindest einen Klemmanschluß aufweist, der eine bewegliche Klaue (35) aufweist, die einer feststehenden Klaue (34) zugewandt ist und die in einer Fläche des Moduls rechtwinklig zur Ebene der Schiene offen ist,
wobei die feststehende Klaue (34) sich in einer Ebene erstreckt, die um einen bestimmten Abstand von der Ebene der Schiene beabstandet ist, wenn der betreffende Modul an der Schiene angebracht ist,
und wobei die bewegliche Klaue sich in eine Ebene zwischen der Ebene der Schiene und der Ebene der feststehenden Klaue erstreckt,
und wobei eine elektrische Verbindungseinrichtung einen elektrisch leitenden Stab (11) mit flachen Zähnen (17) aufweist, die rechtwinklig zu den genannten Flächen der Moduln verlaufen und die im Gebrauch in die Klemmanschlüsse derart eingeführt sind, dass eine elektrische Verbindung zwischen den Einrichtungen geschaffen ist,
und mit einer Trageinrichtung zum Tragen des genannten Stabs, **dadurch gekennzeichnet**, dass die Trageinrichtung ein winkliges Tragelement (10) aus einem Isoliermaterial enthält, welches an der Schiene (1) befestigt ist und welches sich in eine Ebene parallel zu der genannten Fläche derart erstreckt, dass eine Umhüllung für die Unterbringung, Isolation und ein festes Tragen des elektrisch leitenden Stabes (11) gebildet ist,
wobei der Stab in einer Position relativ zu der Schiene (1) derart fest getragen ist, dass die Zähne (17) sich rechtwinklig zu den genannten Flächen der Moduln in derselben Ebene erstrecken, in der die festen Klauen (34) der Moduln verlaufen, nachdem sie befestigt sind,
und dass das winklige Tragelement (10) Öffnungen (18) in der parallel zu der genannten Fläche verlaufenden Ebene für einen Zugang zu Betätigungsköpfen der Eingriffs zähne der modularen Einrichtungen aufweist, so dass deren Betätigung ermöglicht ist.

2. Elektrische Tafel nach Anspruch 1, wobei die Schiene (1) einen Flansch (4) zur Anbringung des winkligen Trägers (10) aufweist und wobei der winklige Träger Einrichtungen (14, 19, 20) für einen irreversiblen Schnappeingriff an dem Befestigungsflansch (4) aufweist.

3. Elektrische Tafel nach Anspruch 2, wobei der Befestigungsflansch (4) einen Eingriffskanal (22) mit der Schiene (1) bildet und zumindest eine Rippe (8) aufweist, die parallel zu der Schiene verläuft und die einen ersten durchgehenden Eingriffszahn bildet,
und wobei die Schnappeingriffseinrichtungen einen U-förmiqen Sitz (14, 19) umfassen, der sich über die Länge des winkligen Elements (10) erstreckt und in den der Befestigungsflansch (4) eingeführt ist, wobei eine Kante (14) des Sitzes mit dem Kanal in Eingriff steht und wobei die andere Kante (19) des Sitzes einen zweiten durchgehenden Eingriffszahn (20) aufweist, der sich in irreversiblem Schnappeingriff mit dem ersten Eingriffszahn (8) befindet.

4. Elektrische Verbindungseinrichtung mit einem elektrisch leitenden Stab für die Verwendung in einer elektrischen Verteilertafel gemäß dem Oberbegriff des Anspruchs 1, umfassend:
einen elektrisch leitenden Stab (11), der in einer Richtung langgestreckt ist und sich in einer Ebene erstreckt und der Zähne (17) aufweist, die rechtwinklig zu der betreffenden Richtung und zu der genannten Ebene verlaufen und die in der betreffenden Richtung in Intervallen beabstandet sind, welche gleich einer genormten Dicke der elektrischen Moduln ist,
wobei ein winkliges Tragelement (10) aus Isoliermaterial vorgesehen ist, welches in der genannten Richtung langgestreckt ist und welches durch zwei rechtwinklige Flansche (13, 14) gebildet ist,
wobei ein erster Flansch (13) sich in der genannten Ebene erstreckt und einen durchgehenden Kanal (16) mit einem L-förmigen Querschnitt aufweist, der sich in der genannten Richtung erstreckt und der ein Gehäuse und eine Isolierschutzhülle für den Stab (11) bildet, welcher darin durch Einführen von einem Ende des winkligen Elements (10) erfasst ist, wobei Öffnungen (18) in dem ersten Flansch (13) gebildet und gleichmäßig in den genannten Intervallen über die Länge des winkligen Elements (10) verteilt sind,
und wobei der zweite Flansch (14) Einrichtungen (14, 19, 20) für einen irreversiblen Schnappeingriff mit einem entsprechenden Befestigungsflansch (4) einer Schiene (1) für den Eingriff der elektrischen Moduln aufweist.

## Revendications

1. Tableau de distribution électrique et de protection comportant un rail support (1) destiné à recevoir une pluralité de dispositifs électriques modulaires (12, 112) fixés sur le rail support (1) au moyen de paires de dents d'engagement (29, 30) de chaque dispositif électrique (12, 112), les dents étant actionnables afin d'adopter une position de dégagement et chacun des dispositifs modulaires ayant au moins une borne de serrage possédant une mâchoire mobile (35) en vis-à-vis d'une mâchoire fixe (34), et qui débouche dans une face du module perpendiculaire au plan du rail support, la mâchoire fixe (34) s'étendant dans un plan espacé d'une distance prédéterminée du plan du rail support lorsque le module respectif est monté sur le rail support, et la mâchoire mobile s'étendant dans un plan entre le plan du rail support et le plan de la mâchoire fixe, et un dispositif d'interconnexion électrique comportant une barre électriquement conductrice (11) possédant des dents planes (17) s'étendant perpendiculairement auxdites faces des modules et en utilisation sont introduites dans les bornes de serrage pour assurer une connexion électrique entre les dispositifs et des moyens supports afin de supporter ladite barre,
caractérisé en ce que les moyens supports comportent :
un élément support angulaire (10) en matériau isolant fixé au rail support (1) et s'étendant dans un plan parallèle à ladite face afin de former une gaine pour recevoir, isoler et supporter solidement la barre électriquement conductrice (11), la barre étant supportée solidement dans une position par rapport au rail support (1) de telle sorte que les dents (17) s'étendent perpendiculairement auxdites faces des modules dans le même plan dans lequel s'étendent les mâchoires fixes (34) des modules après fixation,
l'élément support angulaire (10) ayant les ouvertures (18) dans le plan parallèle à ladite face d'accès pour actionner les têtes des dents d'engagement des dispositifs modulaires pour leur permettre d'être actionnées.

2. Tableau électrique selon la revendication 1, dans lequel le rail support (1) possède un rebord (4) en vue du montage du support angulaire (10) et le support angulaire possède des moyens (14, 19, 20) en vue d'un encliquetage irréversible sur le rebord de montage (4).

3. Tableau électrique selon la revendication 2, dans lequel le rebord de montage (4) forme un canal d'engagement (22) avec le rail support (1) et possède au moins une nervure (8) parallèle au rail support formant une première dent d'engagement continue, et dans lequel les moyens d'encliquetage comportent un siège en forme de U (14, 19) s'étendant sur la longueur de l'élément angulaire (10) et dans lequel le rebord de montage (4) est inséré avec un bord (14) du siège engagé dans le canal, l'autre bord (19) du siège ayant une seconde dent d'engagement continue (20) qui s'encliquette de façon irréversible avec la première dent d'engagement (8).

4. Dispositif d'interconnexion électrique avec une barre électriquement conductrice en vue d'une utilisation dans un tableau de distribution électrique selon le préambule de la revendication 1, comportant :
- une barre électriquement conductrice (11) qui est allongée dans une direction et s'étend dans un plan, et qui possède des dents (17) s'étendant perpendiculairement à ladite direction et audit plan et espacées dans ladite direction à des intervalles égaux à une épaisseur normalisée de modules électriques, et
- un support angulaire (10) en matériau isolant qui est allongé dans ladite direction et est formé par deux rebords (13, 14), un premier rebord (13) s'étendant dans ledit plan et ayant un canal continu (16) de section transversale en forme de L s'étendant dans ladite direction et formant un logement et une gaine isolante pour la barre (11) qui y est engagée par insertion depuis une extrémité de l'élément angulaire (10), et des ouvertures (18) étant pratiquées dans le premier rebord (13) et étant réparties uniformément auxdites intervalles sur la longueur de l'élément angulaire (10),
- le second rebord (14) possédant des moyens (14, 19, 20) en vue d'un encliquetage irréversible avec un rebord de montage correspondant (4) d'un rail support (1) en vue de l'engagement de modules électriques.
